# EUROPÄISCHE PATENTSCHRIFT

(11) **EP 0 729 421 B1**
(45) Veröffentlichungstag und Bekanntmachung des Hinweises auf die Patenterteilung: **20.06.2001**
(21) Anmeldenummer: 95902120.5
(22) Anmeldetag: 02.12.1994
(51) Int. Cl.: B62M 13/04, B62M 23/02, B62M 7/08

(54) **ZUSATZANTRIEB FÜR EIN FAHRRAD**
AUXILIARY DRIVE FOR A BICYCLE
DISPOSITIF D'ENTRAINEMENT AUXILIAIRE POUR UNE BICYCLETTE

(30) Priorität: 03.12.1993 DE 9318528 U; 15.03.1994 DE 4408759
(43) Veröffentlichungstag der Anmeldung: 04.09.1996
(73) Patentinhaber: Gohr, Rainer, 80804 München (DE)
(72) Erfinder: Gohr, Rainer, 80804 München (DE)
(74) Vertreter: Schaumburg, Thoenes, Thurn Patentanwälte
(86) Internationale Anmeldenummer: EP9404021
(87) Internationale Veröffentlichungsnummer: WO9515276

(56) Entgegenhaltungen:
- WO-A-87/00500
- WO-A-93/17904
- DE-U- 8 816 384
- GB-A- 1 499 933
- GB-A- 2 170 458
- US-A- 3 915 250
- US-A- 4 200 164

## Beschreibung

Die Erfindung betrifft einen Zusatzantrieb für ein Fahrrad mit einer elektrischen Spannungsquelle und mindestens einem an diese anschließbaren Elektromotor, der an seiner Welle ein Antriebselement trägt, und zusammen mit der Spannungsquelle an einem mit dem Fahrrad verbindbaren Gestell derart angeordnet ist, daß das Antriebselement des Elektromotors mit einem Gegenantriebselement des Fahrrades in drehmoment-übertragendem Eingriff steht.

Ein Zusatzantrieb dieser Art ist beispielsweise aus der britischen Patentschrift 14 99 933 bekannt. Bei der dort beschriebenen Ausführungsform sind der Motor und der Akkumulator an einem Gestell befestigt, das seinerseits an dem zwischen Schutzblech und Sattelstange liegenden Abschnitt der Hinterradgabel angeschraubt ist. Das Gestell umfaßt zwei zur Ebene des Hinterrades parallele Schenkel, von denen der eine den Akkumulator oder die Akkumulatoren und der andere den Antriebsmotor trägt. Der Antriebsmotor ist so angeordnet, daß seine Welle parallel zur Radachse verläuft. Die Welle trägt eine Reibrolle, die auf der Lauffläche des Hinterrades aufliegt. Der Motor kann um eine außerhalb seiner Welle liegende Achse verschwenkt werden, so daß die Reibrolle von der Lauffläche des Hinterrades abgehoben bzw. in Berührung mit dieser gebracht werden kann. Der Motor ist über ein Kabel mit einer Schalteinrichtung verbunden, die an dem Lenker des Fahrrades angeordnet ist.

Bei der bekannten Lösung kann zwar der Motor in einer Außerbetriebsstellung verstellt werden (wenn wohl auch nur mit Hilfe von Werkzeug), so daß das Fahrrad wie ein herkömmliches Fahrrad benutzt werden kann, jedoch kann das Gestell zusammen mit dem Motor und dem Akkumulator nur mit Hilfe von Werkzeug demontiert werden. Dies ist nicht nur umständlich, wenn man aus irgendwelchen Gründen auf den Zusatzantrieb verzichten will oder umgekehrt sein Fahrrad rasch mit dem Zusatzantrieb versehen will, sondern bereitet auch Schwierigkeiten bei der Sicherung des Fahrrades gegen Diebstähle. In den Großstädten, in denen Fahrräder mit einem solchen Zusatzantrieb bevorzugt eingesetzt werden könnten, werden nicht speziell gesicherte oder in Garagen verwahrte Fahrräder häufig entweder komplett gestohlen oder es wird alles Wertvolle von einem abgestellten Fahrrad von Dieben abmontiert. Ein am Fahrrad fest montierter Zusatzantrieb würde zum Diebstahl des Fahrrades oder des Zusatzantriebes selbst einladen.

Die bekannte Lösung hat noch den weiteren Nachteil, daß bei der Montage des Zusatzantriebes der Hinterradgepäckträger entfernt werden muß. Er steht bei montiertem Zusatzantrieb nicht zur Verfügung und muß nach der Demontage des Zusatzantriebes erst wieder montiert werden.

Aus dem deutschen Gebrauchsmuster 88 16 384 ist ein Fahrrad mit einem Zusatzantrieb bekannt, bei dem der Motor fest mit dem Fahrrad verbunden ist. Die Batterien zur Speisung des Elektromotors sind in Packtaschen beiderseits des Gepäckträgers abnehmbar angeordnet. Bei dieser Lösung können zwar die Batterien zum Aufladen leicht vom Fahrrad abgenommen werden. Der Motor kann jedoch ohne erhebliche Montagearbeiten nicht von dem Fahrrad entfernt oder an dem Fahrrad angeordnet werden.

Die US-A-4 200 164 zeigt ein Fahrrad mit einem Zusatzantrieb. Dieser umfaßt einen Verbrennungsmotor, der zusammen mit einem Treibstofftank an einem U-förmigen Profil befestigt ist. Dieses Profil kann auf ein gabelförmiges Rahmenteil aufgesetzt werden, das anstelle eines Gepäckträgers an der Hinterradnabe sowie dem Fahrradrahmen befestigt ist. Die Verbindung des U-förmigen Profilteiles mit diesem Rahmen erfolgt durch einen Steckbolzen, der durch Bohrungen in dem U-Profil und dem fahrradfesten Rahmenteil gesteckt werden kann. Auf der Ausgangswelle des Motors sitzt eine Reibrolle. Durch eine Spannfeder, die einerseits am U-Profil und andererseits an einem Schenkel des fahrradfesten Rahmenteils eingehängt ist, wird die Reibrolle gegen die Lauffläche des Hinterrades gedrückt. Die Reibrolle kann mit Hilfe eines rohrförmigen Handhebels von der Lauffläche des Hinterrades abgehoben werden. Der Handhebel ist an dem U-Profil befestigt und erstreckt sich von diesem in Richtung auf die Lenkstange des Fahrrades, so-daß der Handhebel von dem Fahrradfahrer betätigt werden kann. Der rohrförmige Handhebel enthält im übrigen weitere stangenförmige Bedienungselemente, zur Steuerung des Motors.

Grundsätzlich ist bei dieser Lösung auch angestrebt, einen Zusatzantrieb zu schaffen, der ohne die Hilfe von Werkzeugen von dem Fahrrad gelöst und entsprechend auch wieder montiert werden kann. In der Praxis hat diese Lösung jedoch erhebliche Nachteile. Die Verbindung zwischen dem U-Profil und dem fahrradfesten Rahmenteil kann durch das Herausziehen des Steckbolzens gelöst werden. In dem Moment kann jedoch die Zugfeder, welche die Reibrolle gegen die Lauffläche des Hinterrades spannt, den ganzen Zusatzantrieb nach einer Seite ziehen und kippen. Es erfordert Umsicht und auch Kraft, um zu verhindern, daß die Zugfeder den Zusatzantrieb in diesem Augenblick von dem Rahmenteil herunterzieht. Anschließend muß die Feder ausgehängt werden. Dies alles muß mit einem Motor erfolgen, der in aller Regel schmutzig und ölig ist und nach dem Gebrauch auch heiß ist. Der Zusatzantrieb ist nicht nur sperrig für den Transport sondern umfaßt als weitere Einzelteile einen Steckbolzen und eine lange Zugfeder, die beide verlorengehen können. Für die Montage muß zunächst die Zugfeder eingehängt und dann der Zusatzantrieb gegen die Vorspannung der Zugfeder in eine Position gebracht werden, in der er mit einer Hand gehalten wird, während mit der anderen Hand der Steckbolzen eingesteckt wird. Alle diese Bedienungshindernisse erschweren die Montage und Demontage des Zusatzantriebes außerordentlich und werden dazu führen, daß man in der Praxis eine solche Demontage zumindest dann unterläßt, wenn das Fahrzeug nur für relativ kurze Zeit abgestellt werden soll.

Die GB-A-2 170 458 beschreibt einen Zusatzantrieb für ein Fahrrad, wobei an einem gepäckträgerartigen Gestell eine Batterieanordnung befestigt ist. An dem Fahrradrahmen zwischen Hinterrad und Sattelstange ist ein Elektromotor derart angeordnet, daß er zwischen einer Betriebsstellung, in der eine Reibrolle an der Lauffläche des Hinterrades anliegt, und einer Außerbetriebsstellung verschwenkt werden kann.

Der Erfindung liegt die Aufgabe zugrunde, einen Zusatzantrieb der eingangs genannten Art anzugeben, der an einem üblichen Fahrrad ohne konstruktive Änderungen desselben ohne Mühe angeordnet und von dem Fahrrad wieder abgenommen werden kann.

Diese Aufgabe wird durch die im Anspruch 1 angegebenen Merkmale gelöst.

Dadurch, daß der Elektromotor und die Spannungsquelle über das mobile Rahmenteil zu einer tragbaren Einheit vereinigt sind, die manuell lösbar mit dem fahrradfesten Rahmenteil verbunden ist, ist es nicht nur möglich, ein normales Fahrrad mit einem Minimum an vorbereitenden Maßnahmen mit dem erfindungsgemäßen Zusatzantrieb auszurüsten, sondern die wesentlichen und auch teureren Teile des Zusatzantriebes können jederzeit ohne Mühe vom Fahrrad abgenommen werden, wenn man den Zusatzantrieb nicht mehr benötigt oder einen Diebstahl des Zusatzantriebes verhindern will.

Je nach Lage des Elektromotors und Ausbildung des Antriebselementes kann das fahrradfeste Rahmenteil ein ganz normaler herkömmlicher Hinterradgepäckträger oder ein in Anpassung an den Zusatzantrieb modifizierter spezieller Gepäckträger sein.

Um eine sichere Befestigung der tragbaren Einheit an dem fahrradfesten Rahmenteil und gleichzeitig eine bequeme Montage und Demontage zu gewährleisten, hat der mobile Rahmenteil einen zur Auflage auf der horizontalen Gepäckträgerfläche des fahrradfesten Rahmenteiles ausgebildeten Befestigungsschenkel und mindestens einen hierzu senkrechten und zur Halterung des Elektromotors und der Spannungsquelle bestimmten Trägerschenkel, wobei mindestens an dem Befestigungsschenkel Verbindungselemente zur Verbindung des mobilen Rahmenteiles mit dem fahrradfesten Rahmenteil vorgesehen sind.

Die Verbindungselemente können von Klauenelementen oder Steckelementen gebildet sein, die mit komplementär ausgebildeten Gegenelementen an dem fahrradfesten Rahmenteil zusammenwirken. Gemäß einer anderen Ausführungsform sind die Verbindungselemente von manuell spann- oder lösbaren Klammern gebildet, die zum Umgreifen von Streben des fahrradfesten Rahmenteils ausgebildet sind. Diese Lösung bietet ähnlich wie klauenförmige Verbindungselemente den Vorteil, daß spezielle Gegenelemente an dem fahrradfesten Rahmenteil nicht erforderlich sind.

Zum Transport der tragbaren Einheit ist es zweckmäßig, wenn an dem mobilen Rahmenteil mindestens ein Traggriff ausgebildet ist. Der Traggriff kann auch mit Betätigungsabschnitten von Verbindungselementen kombiniert sein, beispielsweise mit Hebeln, welche zum Verschwenken von Klauen dienen.

Um die Bedienung des Zusatzantriebes so einfach und komfortabel wie möglich zu machen, ist es zweckmäßig, wenn die Betätigungselemente für den Zusatzantrieb an der Lenkerstange in unmittelbarer Nähe eines der Handgriffe angeordnet sind, so daß der Zusatzantrieb mit einem Finger oder dem Daumen betätigt werden kann. Hierzu ist eine elektrische Verbindung zwischen der Betätigungseinrichtung an der Lenkerstange und der tragbaren Einheit erforderlich, die bei dem Montieren und Abnehmen der tragbaren Einheit an dem fahrradfesten Rahmenteil geschlossen bzw. unterbrochen werden muß. Um diese Maßnahme zu erleichtern, ist es vorteilhaft, daß an dem mobilen Rahmenteil, das neben dem die eigentliche Spannungsquelle bildenden Akkumulator auch noch eine Spannungsregelschaltung umfassen kann, ein mit der Spannungsregelschaltung elektrisch verbundenes Steckerteil vorgesehen ist, an das ein am Fahrrad befestigtes Kabel anschließbar ist, welches die Steuerschaltung mit der Betätigungseinrichtung verbindet. Dabei können das mit dem Kabel verbundene fahrradfeste Steckerteil und das rahmenseitige Steckerteil derart angeordnet sein, daß sie beim Aufsetzen des mobilen Rahmenteiles auf dem fahrradfesten Rahmenteil selbsttätig miteinander in Eingriff treten.

Vorzugsweise ist das Antriebselement des Elektromotors von einer Reibrolle gebildet, die zur Anlage an dem Hinterradreifen bestimmt ist. Um die Reibrolle stets in Kontakt mit dem Reifen zu halten, ist es zweckmäßig, wenn der Elektromotor an dem mobilen Rahmenteil um eine zu seiner Wellenachse senkrechte und zur Radebene parallele Schwenkachse schwenkbar gelagert ist. Dabei kann der Elektromotor noch durch Federmittel in seine Betriebsstellung vorgespannt sein, in der die Reibrolle an dem Fahrradreifen anliegt. Ferner kann der Elektromotor auf diese Weise zwischen einer Betriebsstellung, in der die Reibrolle an dem Reifen anliegt und einer Außerbetriebsstellung verstellt werden, in der die Reibrolle von dem Reifen abgehoben ist. Dies bietet die Möglichkeit, den Zusatzantrieb wahlweise einzuschalten oder außer Betrieb zu setzen, ohne daß die tragbare Einheit von dem Fahrrad abgenommen werden muß. Ferner kann ein Verschwenken des Elektromotors an dem mobilen Rahmenteil auch zum Aufsetzen oder Abnehmen der tragbaren Einheit von dem fahrradfesten Rahmen erforderlich sein. Es ist zweckmäßig, wenn der Benutzer die Möglichkeit hat, den Elektromotor zwischen seiner Betriebsstellung und seiner Außerbetriebsstellung zu verstellen, ohne daß er hierzu vom Fahrrad steigen muß. Diese Verstellung des Elektromotors kann beispielsweise mittels eines Bowden-Zuges erfolgen, der einerseits mit dem motorfesten Teil und andererseits mit einem an der Lenkerstange des Fahrrades angeordneten Stellhebel verbunden ist, wobei zweckmäßigerweise eine manuell betätigbare Kupplung zwischen dem Bowden-Zug und dem motorfesten Teil vorgesehen ist, damit die Bowden-Zugverbindung nicht das Abnehmen und Aufsetzen der tragbaren Einheit behindert. In vielen Fällen wird es jedoch auch ausreichend sein, den Motor mit Hilfe eines Handhebels zu verstellen, der eine Arretierung des Elektromotors in seiner Außerbetriebsstellung erlaubt.

Gemäß einer ersten Ausführungsform der Erfindung ist der Elektromotor an dem mobilen Rahmenteil derart angeordnet, daß eine Wellenachse in der Betriebsstellung des Motors im wesentlichen parallel zur Radachse gerichtet ist, so daß die Reibrolle an der Lauffläche des Reifens anliegt. Hat das Fahrrad in der üblichen Weise ein Schutzblech für das Hinterrad, so ist dieses zweckmäßigerweise mit dem fahrradfesten Rahmenteil verbunden und hat eine Öffnung für den Durchtritt der zur Anlage an der Reifenlauffläche bestimmten Reibrolle. Diese Öffnung kann bei abgenommenem mobilen Rahmenteil durch eine selbsttätig schließende Klappe oder Schürze verschließbar sein, um bei abgenommenem Zusatzantrieb die Funktion des Schutzbleches zu gewährleisten.

Damit der in der vorstehend beschriebenen Weise angeordnete Elektromotor mit seiner Reibrolle an die Lauffläche des Hinterradreifens herangebracht werden kann, ist es zweckmäßig, wenn ein parallel zur Fahrtrichtung des Fahrrades gerichteter Holm des fahrradfesten Rahmenteils einen in Form eines nach oben offenen U gekrümmten Abschnitt zur Aufnahme des Elektromotors hat. Damit bleibt die Stabilität und Funktion des fahrradfesten Rahmenteils als Gepäckträger erhalten.

Gemäß einer anderen Ausführungsform ist der Elektromotor an dem mobilen Rahmenteil derart gelagert, daß eine Wellenachse in der Betriebsstellung des Motors im wesentlichen parallel zur Radebene gerichtet ist, so daß die Reibrolle an einer der Reifenflanken anliegt. Zumindest dann, wenn der mobile Rahmenteil zwei Trägerschenkel hat, die bei montiertem Zusatzantrieb parallel zueinander beiderseits des Hinterrades angeordnet sind, ist es bei dieser Anordnung des Motors zweckmäßig, den motorseitigen Holm des Gepäckträgers oder fahrradfesten Rahmenteiles so einzubuchten, daß beim Aufsetzen der tragbaren Einheit von oben auf den Gepäckträger der Motor nicht mit dem Gepäckträger kollidiert. Es besteht aber auch die Möglichkeit, den Motor an dem Trägerschenkel nach außen zu versetzen, so daß er in der Außerbetriebstellung einen genügend großen Abstand von der Radebene hat, um die tragbare Einheit von einem normalen Gepäckträger abzunehmen bzw. auf den Gepäckträger aufzusetzen. Gegebenenfalls kann auch vorgesehen sein, daß der Motor zwischen seiner Betriebsstellung und Außerbetriebsstellung nicht nur um die Lagerachse verschwenkt sondern auch von der Radebene weg bzw. auf die Radebene zu verstellt werden kann.

Wenn der Antrieb so gewählt ist, daß die Antriebskraft auf die Radflanke des Hinterrades übertragen wird, ist es bei der Übertragung größerer Antriebskräfte zweckmäßig, an jedem Trägerschenkel beiderseits des Hinterrades einen Elektromotor vorzusehen, so daß an jeder Radflanke eine Reibrolle anliegt. Dadurch wird nicht nur die Leistung erhöht sondern auch die Traktion zwischen den Reibrollen und den Radflanken des Hinterrades verbessert.

Es hat sich gezeigt, daß sich ein weitgehend schlupffreier Antrieb auch bei feuchtem Wetter dadurch erreichen läßt, daß die Umfangsfläche der Reibrolle nach Art einer Feinschleiffläche ausgebildet ist. Ein besonders sicherer Antrieb läßt sich erreichen, wenn auf der Umfangsfläche eines Rollenkernes der Reibrolle ein flexibles Diamantschleifband sitzt, das mit flachen diamant-besetzten Nickelnoppen versehen ist. Diese Antriebsoberfläche der Reibrolle gewährleistet auch einen sicheren Antrieb bei Nässe und selbst bei schlammigem Untergrund.

Zum Schutz der Elemente des Zusatzantriebes vor Verschmutzung und Beschädigung ist der mobile Rahmenteil einschließlich des Motors und der Spannungsquelle zweckmäßigerweise in ein Gehäuse aus schlagfestem Kunststoff eingebettet, wobei lediglich eine Öffnung für den Durchtritt der Reibrolle vorgesehen sein muß. Vorzugsweise ist der mobile Rahmenteil zum Schutz vor Nässe in ein Gehäuse aus schlagfestem Kunststoff eingebettet, das auch so ausgeführt sein kann, daß es mindestens einen Teil der tragenden Funktionen des mobilen Rahmenteils übernimmt.

Vorzugsweise sind an der Lenkerstange die Bedienungselemente zur Antriebssteuerung auf einem unterhalb des Lenkergriffs positionierten Gehäuse angeordnet, das etwa die Größe einer Zigarettenschachtel haben kann und über einen passend geformten Haltebügel an der Lenkerstange so befestigt ist, daß alle Bedienungselemente vom Daumen einer Hand zu betätigen sind, ohne daß die Hand vom Lenker genommen werden muß. Auch dieses Gehäuse oder der mit dem Gehäuse verbundene Haltebügel können lösbar am Lenker befestigt und mit elektrischen Kupplungselementen ausgestattet sein, die beim Aufstecken selbsttätig miteinander in Eingriff treten, so daß die Betätigungseinrichtung ohne Schwierigkeiten abgenommen und wieder angebracht werden kann.

Die vorstehende Beschreibung zeigt, daß mit der erfindungsgemäßen Lösung ein Zusatzantrieb geschaffen wird, der ohne wesentliche bauliche Änderungen an jedem normalen Fahrrad angebracht werden kann, mühelos manuell abgenommen und wieder aufgesetzt werden kann und weder die normale Benutzung des Fahrrads noch die Benutzung des Gepäckträgers behindert. Aufgrund der heute verfügbaren Motoren und Akkumulatoren, kann der erfindungsgemäße Antrieb hinsichtlich der Abmessungen und seines Gewichtes so gestaltet werden, daß er bequem tragbar und handhabbar ist und dennoch eine einem Elektro-Leichtmofa vergleichbare Leistung bietet.

Weitere Merkmale und Vorteile der Erfindung ergeben sich aus der folgenden Beschreibung, welche in Verbindung mit den beigefügten Zeichnungen die Erfindung anhand von Ausführungsbeispielen erläutert. Es zeigen:
- Figur 1: eine schematische Seitenansicht eines mit dem erfindungsgemäßen Zusatzantrieb ausgestatteten Fahrrades,
- Figur 2: eine schematische Seitenansicht des erfindungsgemäßen Zusatzantriebes,
- Figur 3: eine schematische Endansicht des erfindungsgemäßen Zusatzantriebes,
- Figur 4: eine schematische Seitenansicht eine Spezialgepäckträgers zur Montage des erfindungsgemäßen Zusatzantriebes,
- Figur 5: eine Draufsicht auf den in Figur 4 dargestellten Gepäckträger,
- Figur 6: eine schematische Seitenansicht des auf dem Gepäckträger montierten Zusatzantriebes,
- Figur 7: einen schematischen Teilschnitt entlang der Linie VII-VII in Figur 6,
- Figuren 8 bis 10: schematische Detailansichten zur Erläuterung der Verbindungselemente zwischen dem mobilen Rahmenteil und dem Gepäckträger,
- Figur 11: eine schematische Endansicht des Fahrrades mit montiertem Zusatzantrieb, bei dem die Reibrolle des Elektromotors an der Radflanke anliegt,
- Figur 12: eine schematische Draufsicht auf die Anordnung nach Figur 11,
- Figuren 13 und 14: den Figuren 11 bzw. 12 entsprechende Ansichten einer Ausführungsform mit zwei seitlich des Hinterrades angeordneten Elektromotoren, und
- Figur 15: eine perspektivische Teilansicht des hinteren Abschnittes eines Fahrrades mit einer in einem Gehäuse eingeschlossenen Antriebseinheit.

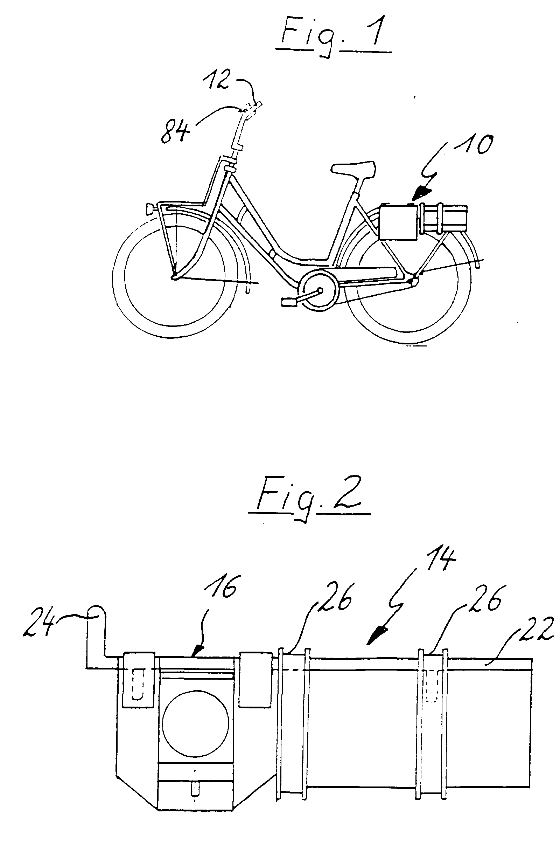

Figur 1 zeigt in einer schematischen Seitenansicht ein Fahrrad, auf dessen rückwärtem Gepäckträger ein allgemein mit 10 bezeichneter Zusatzantrieb angeordnet ist, der von der Lenkstange 12 her ein- und ausgeschaltet werden kann und dessen Aufbau und Montage im folgenden näher erläutert werden soll.

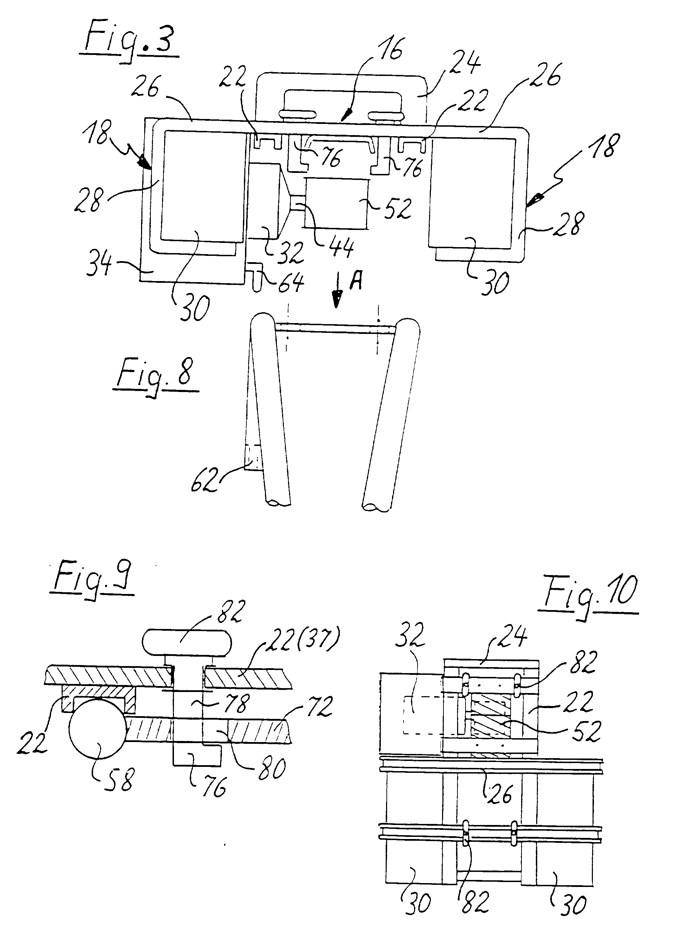

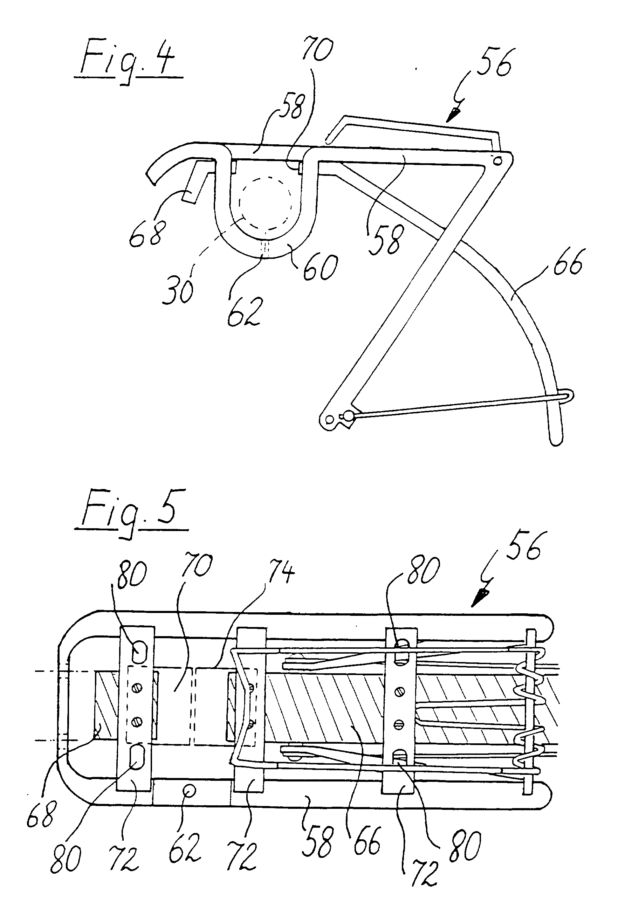

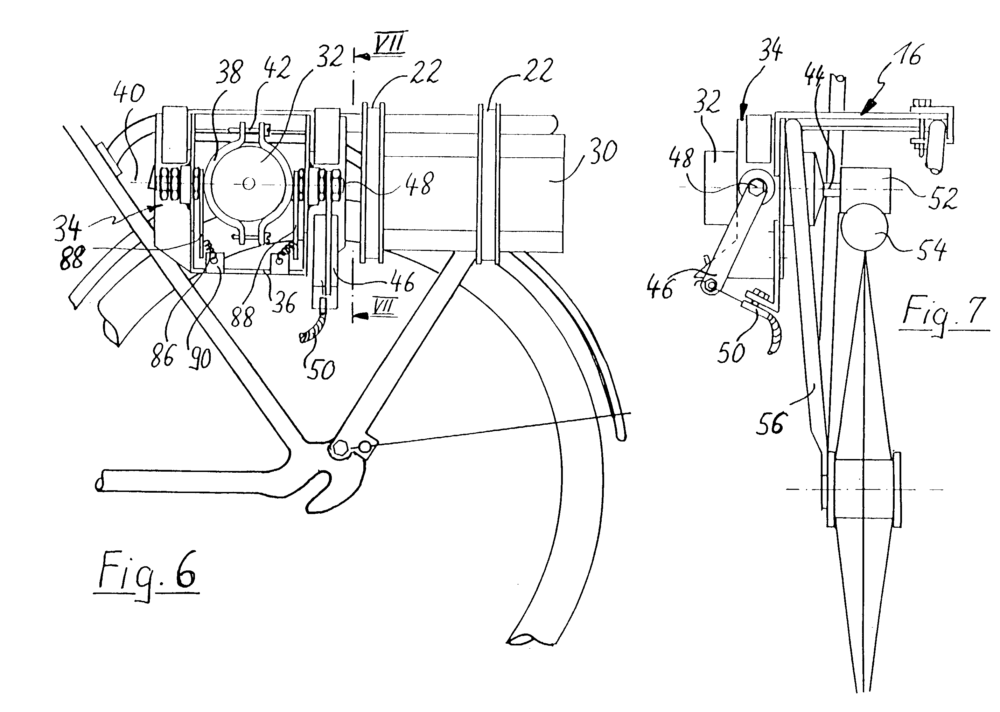

Gemäß den Figuren 2, 3 und 10 umfaßt der erfindungsgemäße Zusatzantrieb ein mobiles Rahmenteil 14 mit einem mittleren Befestigungsschenkel 16 und zwei seitlichen Trägerschenkeln 18. Der Befestigungsschenkel 16 ist zur Auflage auf dem Gepäckträger des Fahrrades bestimmt und besteht im wesentlichen aus zwei Längsholmen 22 (Figur 3), die an ihrem einen Ende durch einen als Tragegriff ausgebildeten Bügel 24 und in ihrem mittleren Bereich durch zwei C-förmig ausgebildete Querbügel 26 miteinander verbunden sind. Die Endabschnitte 28 der C-förmigen Bügel 26 bilden jeweils die Trägerschenkel 18 und umschließen kastenförmige Gehäuse 30 zur Aufnahme von Akkumulatoren oder Batterien. Diese speisen einen Elektromotor 32, der zusammen mit einer nicht dargestellten Spannungsregelschaltung in einer Halterung 34 gelagert ist, wie dies anhand der Figur 6 im folgenden erläutert wird.

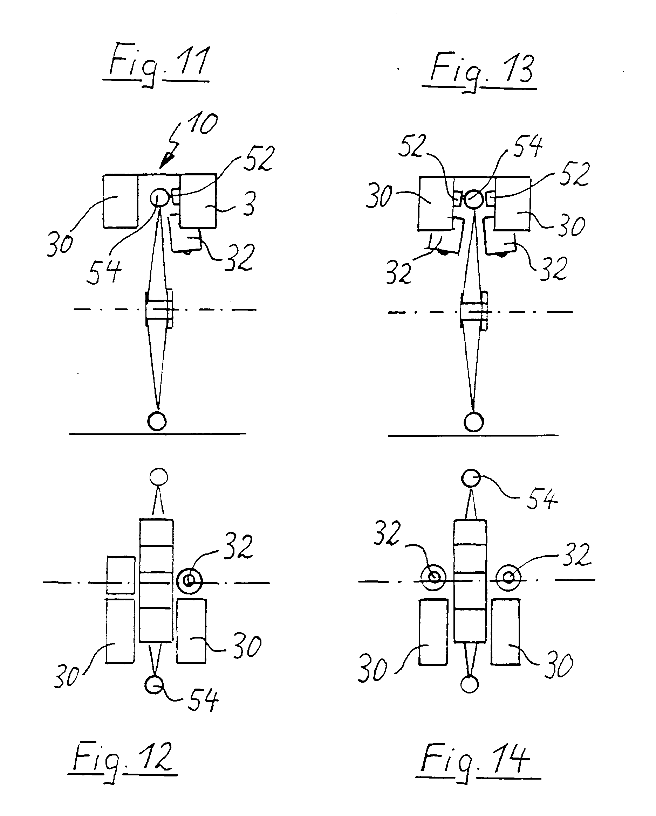

Die Halterung 34 umfaßt eine an einem der Längsholme 22 befestigten Rahmen 36, in dem eine Schelle 38 um eine zu dem Längsholm 22 parallele Schwenkachse 40 schwenkbar gelagert ist. In der Schelle 38 ist der Elektromotor 32 mit Hilfe von Spannschrauben 42 eingespannt, wobei er in Richtung seiner Welle 44 verstellt werden kann. Die Schelle 38 und damit der Motor 32 kann mit Hilfe eines Stellhebels 46 verschwenkt werden (siehe auch Figur 7), der über eine Schwenkwelle 48 drehfest mit der Schelle 38 verbunden ist und über einen Bowden-Zug 50 mit einem an der Lenkstange 12 angeordneten, nicht dargestellten Stellhebel verbunden ist. Mit Hilfe dieses Bowden-Zuges kann der Motor um die Achse 40 zwischen einer Betriebsstellung, in welcher eine auf seiner Welle 44 sitzende Reibrolle 52 auf der Lauffläche des Hinterradreifens 54 aufliegt (Figur 7) und einer Außerbetriebstellung verschwenkt werden, in der die Reibrolle 52 von dem Hinterradreifen 54 abgehoben ist. Der soweit beschriebene Zusatzantrieb stellt eine kompakte tragbare Einheit dar, die auf einfache Weise an dem Fahrrad montiert und von dem Fahrrad wieder gelöst werden kann und bequem zu transportieren ist. Die Anordnung des erfindungsgemäßen Zusatzantriebs an dem Fahrrad soll nun im folgenden erläutert werden.

Der Gepäckträger 56, auf dem der Zusatzantrieb 10 aufgesetzt werden soll, ist in den Figuren 4 und 5 dargestellt. Er unterscheidet sich von einem herkömmlichen Gepäckträger üblicher Bauart dadurch, daß einer seiner Längsholme 58 eine nach oben offene U-förmige Krümmung 60 hat, die zur Aufnahme des Motors 32 dient, wie dies in Figur 4 angedeutet ist. Im U-Querschenkel, d.h. im tiefsten Punkt der U-förmigen Krümmung ist eine Bohrung 62 vorgesehen, die zur Aufnahme eines mit der Halterung 34 verbundenen Zapfens 64 (Figur 3) bestimmt ist, wenn die Einheit 10 auf den Gepäckträger 56 aufgesetzt wird.

Ein weiterer Unterschied zu herkömmlichen Gepäckträgern besteht darin, daß an dem Gepäckträger 56 die Abschnitte 66 und 68 eines Schutzbleches befestigt sind, die zwischen sich eine Öffnung 70 freilassen, durch den die Reibrolle 52 hindurchtreten kann. An einer der Querstreben 72, welche die Längsholme 58 des Gepäckträgers miteinander verbinden und an denen die Abschnitte 66 und 68 des Schutzbleches befestigt sind, ist ferner eine Gummi- oder Kunststoffklappe oder -schürze 74 befestigt (Figur 5), welche die Öffnung 70 überdeckt, wenn der Zusatzantrieb 10 von dem Gepäckträger 56 abgenommen ist.

Der Zusatzantrieb 10 wird auf den Gepäckträger 56 in Richtung des Pfeiles A aufgesetzt, wie dies die Zusammenschau der Figuren 3 und 8 zeigt. Dabei tritt nach dem Hochheben der Schürze 74 die Reibrolle 52 durch die Öffnung 70, so daß sie auf der Lauffläche des Hinterradreifens 54 zu liegen kommt. Vorzugsweise ist die Schürze oder Klappe zweiteilig nach Art einer Schwingtür ausgebildet, deren Teile selbsttätig in ihre Schließstellung zurückkehren. Dabei greift der Zapfen 64 in die Öffnung 62 in der U-förmigen Krümmung 60 des Längsholmes 58. Gleichzeitig greifen hakenförmige Verbindungselemente 76, die jeweils mit einem Schaftteil 78 in einem der C-förmigen Bügel 26 und einer der Traversen 37 drehbar gelagert sind (Figuren 9 und 10), in Langlöcher 80, die in den Traversen 72 des Gepäckträgers 56 ausgebildet sind (Figur 5). Durch Drehen der hakenförmigen Verbindungselemente mittels der an den Schäften 78 ausgebildeten Knebel 82 aus der in Figur 9 dargestellten Stellung in die in der Figur 10 dargestellte Stellung wird der mobile Rahmen 14 und damit der gesamte Zusatzantrieb an dem Gepäckträger 56 verriegelt. Für eine Inbetriebnahme des Zusatzantriebes braucht nun nur noch eine elektrische Verbindung zwischen einer an der Lenkstange 12 angeordneten Betätigungseinrichtung 84 und einer in der Motorhalterung angeordneten nicht dargestellten Steuerschaltung hergestellt werden, wozu ein die Betätigungseinrichtung 84 mit der Steuerschaltung verbindendes nicht dargestelltes Kabel mit einem fahrradseitigen Steckerteil an ein mit der Einheit 10 verbundenes nicht dargestelltes Steckerteil angeschlossen wird. Ferner muß über eine nicht dargestellte Kupplung die Bowdenzugverbindung zwischen dem lenkerseitigen Stellhebel und dem Schwenkhebel 46 hergestellt werden. Wenn man darauf verzichtet, den Motor 32 von der Lenkstange aus und damit auch gegebenenfalls während des Fahrens zwischen seiner Betriebsstellung und seiner Außerbetriebsstellung verschwenken zu können, genügt es, den Schwenkhebel 46 als Handhebel auszubilden und mit einer Arretierung zu versehen, um den Motor in seiner Außerbetriebsstellung feststellen zu können. In dem Fall entfällt die sonst erforderliche Kupplung des Hebels 46 mit dem Bowdenzug.

Damit auch bei feuchter Witterung und schlechten Straßenverhältnissen eine möglichst schlupffreie Drehmomentübertragung zwischen der Reibrolle 52 und dem Reifen 54 möglich ist, wird der Motor 32 mit Hilfe von Federn 86, die einerseits an drehfest mit der Schelle 38 verbundenen Hebeln 88 und andererseits an mit dem Rahmen 36 verbundenen Laschen 90 angreift, in seine Betriebsstellung vorgespannt, so daß die Reibrolle 52 durch die Federn 86 gegen die Lauffläche des Reifens 54 gedrückt wird. Darüberhinaus ist die Reibrolle 52 mit einem Diamant-Schleifband beschichtet, das in flachen Nickelnoppen Diamantkörner trägt. Es hat sich gezeigt, daß mit diesem Belag selbst bei schlammigem Untergrund eine Kraftübertragung auf die Lauffläche des Reifens möglich ist.

Bei der vorstehend beschriebenen Ausführungsform ist der Elektromotor 32 so angeordnet, daß in seiner Betriebsstellung die Wellenachse parallel zur Radachse des angetriebenen Hinterrades gerichtet ist. Die Figuren 11, 12 und 13, 14 zeigen jeweils eine Ausführungsform, bei der der Motor so an dem jeweiligen Trägerschenkel der Einheit 10 gelagert ist, daß seine Wellenachse in der Betriebsstellung im wesentlichen parallel zur Radebene liegt und die Reibrolle an einer Reifenflanke anliegt. Die Figuren 11, 12 zeigen dabei eine Ausführungsform, die einen Motor verwendet. Sollen größere Drehmomente übertragen werden, ist die in den Figuren 13 und 14 dargestellte Ausführungsform vorzuziehen, bei der auf jeder Seite des Hinterrades ein Motor angeordnet ist, so daß an beiden Radflanken eine Reibrolle die Antriebsenergie überträgt. An dem grundsätzlichen Aufbau der erfindungsgemäßen Antriebseinheit ändert dies jedoch nichts.

Wie die vorstehende Beschreibung zeigt, kann der erfindungsgemäße Zusatzantrieb ohne die Zuhilfenahme von Werkzeug montiert und demontiert werden, wobei der Gepäckträger sowohl mit Zusatzantrieb als auch ohne Zusatzantrieb für den Transport von Lasten in der üblichen Weise benutzt werden kann.

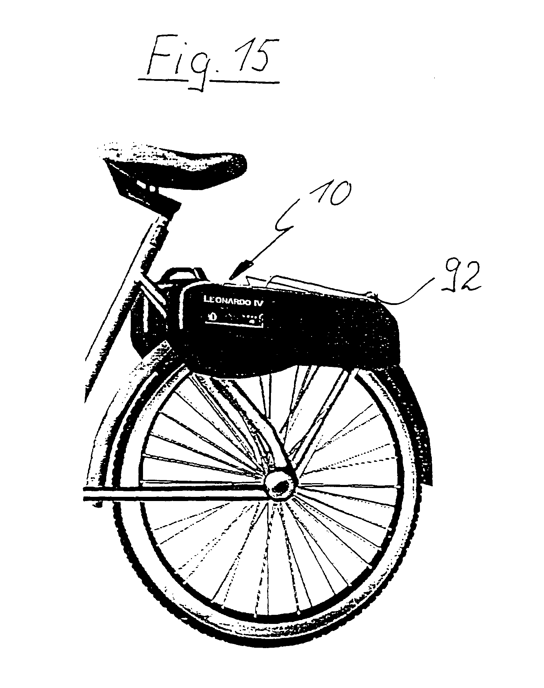

Figur 15 schließlich zeigt eine praktische Ausführungsform des montierten Zusatzantriebes mit einem geschlossenen Gehäuse 92 aus schlagfestem Kunststoff. Dieses kann auch so ausgebildet sein, daß es die Funktionen des mobilen Rahmenteiles mindestens teilweise übernimmt.

## Patentansprüche

1. Zusatzantrieb für ein Fahrrad mit einer elektrischen Spannungsquelle (30) und mindestens einem an diese anschließbaren Elektromotor (32), der an seiner Welle (44) ein Antriebselement (52) trägt und zusammen mit der Spannungsquelle (30) an einem mit dem Fahrrad verbindbaren Gestell (14, 56) derart angeordnet ist, daß das Antriebselement (52) des Elektromotors (32) mit einem Gegenantriebselement (54) des Fahrrades in drehmomentübertragenden Eingriff treten kann, dadurch **gekennzeichnet,** daß das den Elektromotor (32) und die Spannungsquelle (33) tragende Gestell als mobiler Rahmenteil (14) ausgebildet ist, der mit dem Elektromotor (32) und der Spannungsquelle (30) eine tragbare Einheit (10) bildet, die auf einen Hinterradgepäckträger oder einen diesem entsprechenden fahrradfesten Rahmenteil (56) aufsetzbar ist und durch Befestigungsmittel (76) mit dem Hinterradgepäckträger oder dem diesem entsprechenden fahrradfesten Rahmenteil (56) manuell lösbar verbindbar ist, wobei die Befestigungsmittel an der tragbaren Einheit (10) und/oder dem fahrradfesten Rahmenteil (56) angeordnet sind.

2. Zusatzantrieb nach Anspruch 1, dadurch **gekennzeichnet,** daß das Antriebselement (52) eine Reibrolle ist, die zur Anlage an dem Reifen (54) des Hinterrades des Fahrrades bestimmt ist.

3. Zusatzantrieb nach Anspruch 1 oder 2, dadurch **gekennzeichnet,** daß an den mobilen Rahmenteil (14) mindestens ein Traggriff (24) ausgebildet ist.

4. Zusatzantrieb nach einen der Ansprüche 1 bis 3, dadurch **gekennzeichnet,** daß der mobile Rahmenteil (14) einen zur Auflage auf der horizontalen Gepäckträgerfläche des fahrradfesten Rahmenteiles (56) ausgebildeten Befestigungsschenkel (16) und mindestens einen hierzu senkrechten und zur Halterung des Elektromotors (32) und der Spannungsquelle (30) bestimmten Trägerschenkel (18) hat, wobei mindestens an dem Befestigungsschenkel (16) Verbindungselemente (70) zur Verbindung des mobilen Rahmenteiles (14) mit dem fahrradfesten Rahmenteil (56) vorgesehen sind.

5. Zusatzantrieb nach Anspruch 4, dadurch **gekennzeichnet,** daß die Verbindungselemente von Klauen- oder Steckelementen (76, 64) gebildet sind, die mit komplementär ausgebildeten Gegenelementen (80, 62) an dem fahrradfesten Rahmenteil (56) zusammenwirken.

6. Zusatzantrieb nach einem der Ansprüche 1 bis 5, dadurch **gekennzeichnet,** daß die Verbindungselemente von manuell spann- und lösbaren Klammern gebildet sind, welche zum Umgreifen von Streben des fahrradfesten Rahmenteiles (56) ausgebildet sind.

7. Zusatzantrieb nach einem der Ansprüche 4 bis 6, dadurch **gekennzeichnet,** daß der Betätigungsabschnitt mindestens eines Verbindungselementes mit einem Traggriff der tragbaren Einheit kombiniert ist.

8. Zusatzantrieb nach einem der Ansprüche 1 bis 7, dadurch **gekennzeichnet,** daß die Spannungsquelle einen Akkumulator und eine Spannungsregelschaltung umfaßt, und daß an dem mobilen Rahmenteil (14) ein mit der Spannungsregelschaltung elektrisch verbundenes Steckerteil vorgesehen ist, an das ein am Fahrrad befestigtes Kabel anschließbar ist, welches die Spannungsregelschaltung mit einer an der Lenkerstange (12) des Fahrrades angeordneten Betätigungseinrichtung (84) verbindet.

9. Zusatzantrieb nach Anspruch 8, dadurch **gekennzeichnet,** daß ein mit dem Kabel verbundenes fahrradfestes Steckerteil und das rahmenseitige Steckerteil derart angeordnet sind, daß sie beim Aufsetzen des mobilen Rahmenteiles (14) auf dem fahrradfesten Rahmenteil (56) selbsttätig miteinander in Eingriff treten.

10. Zusatzantrieb nach einem der Ansprüche 1 bis 9, dadurch **gekennzeichnet,** daß bei Verwendung eines Reibrollenantriebes der Elektromotor (32) an dem mobilen Rahmenteil (14) um eine zu seiner Wellenachse (44) senkrechte und zur Radebene parallele Schwenkachse (40) schwenkbar gelagert ist.

11. Zusatzantrieb nach Anspruch 10, dadurch **gekennzeichnet,** daß der Elektromotor (32) durch Federmittel (36) in seine Betriebsstellung vorgespannt ist, in der die Reibrolle (52) an dem Fahrradreifen (54) anliegt.

12. Zusatzantrieb nach Anspruch 10 oder 11, dadurch **gekennzeichnet,** daß der Elektromotor (32) zwischen einer Betriebsstellung, in der die Reibrolle (52) an dem Reifen (54) anliegt, und einer Außerbetriebsstellung verstellbar ist, in der die Reibrolle (52) von dem Reifen (54) abgehoben ist.

13. Zusatzantrieb nach Anspruch 12, dadurch **gekennzeichnet,** daß der Elektromotor (32) mittels eines Bowdenzuges (50) verstellbar ist, der einerseits mit einem motorfesten Teil (46) und andererseits mit einem an der Lenkerstange (12) des Fahrrades angeordneten Stellhebel verbunden ist, wobei eine manuell betätigbare Kupplung zwischen dem Bowdenzug (50) und dem motorfesten Teil (46) vorgesehen ist.

14. Zusatzantrieb nach einem der Ansprüche 10 bis 13, dadurch **gekennzeichnet,** daß der Elektromotor (32) in einer an dem mobilen Rahmenteil (14) schwenkbar gelagerten Halterung (38) in Richtung seiner Wellenachse (44) verstellbar eingespannt ist.

15. Zusatzantrieb nach einem der Ansprüche 1 bis 14, dadurch **gekennzeichnet,** daß der Elektromotor (32) an dem mobilen Rahmenteil (14) derart angeordnet ist, daß seine Wellenachse (44) in der Betriebsstellung des Motors (32) im wesentlichen parallel zur Radachse gerichtet ist, so daß die Reibrolle (52) an der Lauffläche des Reifens (54) anliegt:

16. Zusatzantrieb nach Anspruch 15, dadurch **gekennzeichnet,** daß der fahrradfeste Rahmenteil (56) mit einem Schutzblech (66, 68) für das Hinterrad verbunden ist, wobei dieses Schutzblech eine Öffnung (70) für den Durchtritt der zur Anlage an der Reifenlauffläche bestimmten Reibrolle (52) hat.

17. Zusatzantrieb nach Anspruch 16, dadurch **gekennzeichnet,** daß die Öffnung (70) bei abgenommenem mobilen Rahmenteil (14) durch eine selbsttätig schließende ein- oder mehrteilige Klappe oder Schürze (74) verschließbar ist.

18. Zusatzantrieb nach einem der Ansprüche 15 bis 17, dadurch **gekennzeichnet,** daß ein parallel zur Fahrtrichtung des Fahrrades gerichteter Holm (58) des fahrradfesten Rahmenteils einen in Form eines nach oben offenen U gekrümmten Abschnitt (60) zur Aufnahme des Elektromotors (32) hat.

19. Zusatzantrieb nach einem der Ansprüche 1 bis 14, dadurch **gekennzeichnet,** daß der Elektromotor (32) an dem mobilen Rahmenteil (14) derart gelagert ist, daß seine Wellenachse in der Betriebsstellung des Motors im wesentlichen parallel zur Radebene gerichtet ist, so daß die Reibrolle (52) an einer der Reifenflanken anliegt.

20. Zusatzantrieb nach Anspruch 19, dadurch gekennzeichnet, daß die Motor-Reibrolleneinheit (32, 52) am Trägerschenkel (18) so nach außen versetzt ist, daß ihre Teile in Außerbetriebsstellung parallel zur Radebene stehen und die Abnahme des mobilen Rahmenteils (14) von einem Gepäckträger nicht mehr behindern.

21. Zusatzantrieb nach einem der Ansprüche 18 bis 20, dadurch **gekennzeichnet,** daß der mobile Rahmenteil (14) zwei zueinander parallele und zur Anordnung beiderseits des Hinterrades bestimmte Trägerschenkel (18) hat.

22. Zusatzantrieb nach den Ansprüchen 19 und 21, dadurch **gekennzeichnet,** daß an jedem der Trägerschenkel (18) ein Elektromotor (32) und eine Schelle (38) angeordnet sind.

23. Zusatzantrieb nach einen der Ansprüche 1 bis 22, dadurch **gekennzeichnet,** daß die Umfangsfläche der Reibrolle (52) nach Art einer Feinschleiffläche ausgebildet ist.

24. Zusatzantrieb nach Anspruch 23, dadurch **gekennzeichnet,** daß auf der Umfangsfläche eines Rollenkernes der Reibrolle (52) ein flexibles Diamant-Schleifband sitzt, das mit flachen, diamantbesetzten Nickelnoppen versehen ist.

25. Zusatzantrieb nach einem der Ansprüche 1 bis 24, dadurch **gekennzeichnet,** daß der Befestigungsschenkel (16) des mobilen Rahmenteils (14) so ausgeführt ist, daß die Federklammer des Gepäckträgers oder fahrradfesten Rahmenteils (56) bei aufgesetztem mobilem Rahmenteil (14) funktionsfähig bleibt.

26. Zusatzantrieb nach einem der Ansprüche 1 bis 21, dadurch **gekennzeichnet,** daß der Befestigungsschenkel (16) des mobilen Rahmenteiles (14) als Gepäckträgerfläche ausgebildet ist und eine Federklammer trägt.

27. Zusatzantrieb nach einem der Ansprüche 1 bis 26, dadurch **gekennzeichnet,** daß an der Lenkerstange (12) des Fahrrades Bedienungselemente zur Antriebssteuerung auf einem unterhalb des Lenkergriffes (12) positionierten Gehäuse angeordnet sind, das über einen passend geformten Haltebügel neben dem Lenkergriff an der Lenkerstange befestigt und so ausgeführt ist, daß alle Bedienungselemente vom Daumen der entsprechenden Hand betätigbar sind.

28. Zusatzantrieb nach Anspruch 27, dadurch **gekennzeichnet,** daß der Haltebügel des Gehäuses durch Steckelemente lösbar am Lenker befestigt ist und mit elektrischen Kupplungselementen ausgestattet ist, die beim Aufstecken selbsttätig mit entsprechenden Kupplungselementen am Lenker in Eingriff treten.

29. Zusatzantrieb nach Anspruch 27 oder 28, dadurch **gekennzeichnet,** daß die Bedienungselemente auf einer unterhalb des Lenkergriffs positionierten Schaltleiste sitzen, die durch Steckelemente lösbar mit der Lenkerstange (12) verbunden ist und deren Bedienungselemente durch den Daumen der entsprechenden Hand betätigbar sind.

## Claims

1. A supplementary drive for a bicycle with an electrical voltage source (30) and at least one electric motor (32) which is adapted to be connected thereto and which carries a drive element (52) on its shaft (44) and is so disposed, together with the voltage source (30), on a frame (14, 56) connectable to the bicycle that the drive element (52) of the electric motor (32) can engage a coacting drive element (54) of the bicycle in such manner as to transmit torque, characterised in that the frame bearing the electric motor (32) and the voltage source (33) is constructed as a mobile frame part (14) which, together with the electric motor (32) and the voltage source (30), forms a portable unit (10) which is adapted to be placed on a rear wheel luggage carrier or a frame part (56) corresponding thereto, such frame part being fixed on the bicycle, and which is connectable in manually releasable fashion by fixing means (76) to the rear wheel luggage carrier or the frame part (56) corresponding thereto and fixed on the bicycle, the fixing means being disposed on the portable unit (10) and/or on the frame part (56) fixed to the bicycle.

2. A supplementary drive according to claim 1, characterised in that the drive element (52) is a friction roller which is intended to bear against the tyre (54) of the bicycle rear wheel.

3. A supplementary drive according to claim 1 or 2, characterised in that at least one carrying handle (24) is formed on the mobile frame part (14).

4. A supplementary drive according to any one of claims 1 to 3, characterised in that the mobile frame part (14) has one fixing limb (16) formed so as to rest on the horizontal luggage carrier surface of the frame part (56) fixed on the bicycle and at least one carrier limb (18) perpendicular thereto and intended to hold the electric motor (32) and voltage source (30), connecting elements (70) for connecting the mobile frame part (14) to the frame part (56) fixed on the bicycle being provided at least on the fixing limb (16).

5. A supplementary drive according to claim 4, characterised in that the connecting elements are formed by claw or plug elements (76, 64) which cooperate with companion elements (80, 62) of complementary construction on the frame part (56) fixed on the bicycle.

6. A supplementary drive according to any one of claims 1 to 5, characterised in that the connecting elements are formed by manually clampable and releasable clips constructed to engage around struts of the frame part (56) fixed on the bicycle.

7. A supplementary drive according to any one of claims 4 to 6, characterised in that the actuating portion of at least one connecting element is combined with a carrying handle of the portable unit.

8. A supplementary drive according to any one of claims 1 to 7, characterised in that the voltage source comprises an accumulator and a voltage regulating circuit, and in that a plug part electrically connected to the voltage regulating circuit is provided on the mobile frame part (14) and connectable to said plug part is a cable fixed on the bicycle, said cable connecting the voltage regulating circuit to an actuating device (84) disposed on the bicycle handlebar (12).

9. A supplementary drive according to claim 8 characterised in that a plug part fixed on the bicycle and connected to the cable, and the plug part adjacent the frame, are so disposed that when the mobile frame part (14) is placed on the frame part (56) fixed on the bicycle they automatically engage one another.

10. A supplementary drive according to any one of claims 1 to 9, characterised in that when a friction roller drive is used the electric motor (32) is mounted on the mobile frame part (14) so as to be pivotable about a pivot axis (40) perpendicular to its shaft axis (44) and parallel to the wheel plane.

11. A supplementary drive according to claim 10, characterised in that the electric motor (32) is biased by spring means (86) into its operational position in which the friction roller (52) bears against the bicycle tyre (54).

12. A supplementary drive according to claim 10 or 11, characterised in that the electric motor (32) is adjustable between an operational position in which the friction roller (52) bears against the tyre (54) and an inoperative position in which the friction roller (52) is lifted from the tyre (54).

13. A supplementary drive according to claim 12, characterised in that the electric motor (32) is adjustable by means of a Bowden cable (50) which is connected at one end to a part (46) connected to the motor and at the other end to a control lever disposed on the bicycle handlebar (12), a manually actuatable coupling being provided between the Bowden cable (50) and the part (46) fixed on the motor.

14. A supplementary drive according to any one of claims 10 to 13, characterised in that the electric motor (32) is clamped so as to be adjustable in the direction of its shaft axis (44) in a mounting (38) pivotally supported on the mobile frame part (14).

15. A supplementary drive according to any one of claims 1 to 14, characterised in that the electric motor (32) is so disposed on the mobile frame part (14) that its shaft axis (44) is directed substantially parallel to the wheel axis in the operational position of the motor (32) so that the friction roller (52) bears against the tread surface of the tyre (54).

16. A supplementary drive according to claim 15, characterised in that the frame part (56) fixed on the bicycle is connected to a mudguard (66, 68) for the rear wheel, said mudguard having an opening (70) for the passage of the friction roller (52) intended to bear against the tyre tread surface.

17. A supplementary drive according to claim 16, characterised in that when the mobile frame part (14) is removed the opening (70) is closeable by an automatically closing one-piece or multi-part flap or apron (74).

18. A supplementary drive according to any one of claims 15 to 17, characterised in that a spar (58) extending parallel to the direction of travel of the bicycle and forming part of the frame part fixed on the bicycle has a U-curved portion (60) open at the top to receive the electric motor (32).

19. A supplementary drive according to any one of claims 1 to 14, characterised in that the electric motor (32) is so mounted on the mobile frame part (14) that its shaft axis is directed substantially parallel to the wheel plane in the operational position of the motor so that the friction roller (52) bears against one of the tyre flanks.

20. A supplementary drive according to claim 19, characterised in that the motor and friction roller unit (32, 52) is outwardly offset at the carrier limb (18) in such manner that its parts in the inoperative position are parallel to the wheel plane and no longer obstruct the removal of the mobile frame part (14) from a luggage carrier.

21. A supplementary drive according to any one of claims 18 to 20, characterised in that the mobile frame part (14) has two carrier limbs (18) parallel to one another and intended to be disposed on either side of the rear wheel.

22. A supplementary drive according to claims 19 and 21, characterised in that an electric motor (32) and a bracket (38) are disposed on each of the carrier limbs (18).

23. A supplementary drive according to any one of claims 1 to 22, characterised in that the peripheral surface of the friction roller (52) is constructed after the style of a precision polishing surface.

24. A supplementary drive according to claim 23, characterised in that a flexible diamond polishing band is mounted on the peripheral surface of a roller core of the friction roller (52) and is provided with flat diamond-equipped nickel projections.

25. A supplementary drive according to any one of claims 1 to 24, characterised in that the fixing limb (16) of the mobile frame part (14) is so constructed that when the mobile frame part (14) is fitted the spring clip of the luggage carrier or of the frame part (56) fixed on the bicycle remains functionable.

26. A supplementary drive according to any one of claims 1 to 21, characterised in that the fixing limb (16) of the mobile frame part (14) is constructed as a luggage carrier surface and bears a spring clip.

27. A supplementary drive according to any one of claims 1 to 26, characterised in that operating elements for controlling the drive are disposed on the handlebar (12) on a housing positioned beneath the handlebar handle (12) said housing being fixed on the handlebar next to the handlebar handle by means of a retaining stirrup of appropriate shape and being so constructed that all the operating elements can be actuated by the thumb of the corresponding hand.

28. A supplementary drive according to claim 27 characterised in that the housing retaining stirrup is fixed releasably on the handlebar by plug-in elements and is equipped with electric coupling elements which, when plugged in, automatically engage corresponding coupling elements on the handlebar.

29. A supplementary drive according to claim 27 or 28, characterised in that the operating elements are mounted on a control strip positioned beneath the handlebar handle and connected by plug-in elements releasably to the handlebar (12), the control strip operating elements being actuatable by the thumb of the corresponding hand.

## Revendications

1. Dispositif d'entraînement auxiliaire pour une bicyclette, comportant une source de tension électrique (30) et au moins un moteur électrique (32), raccordable à celle-ci, dont l'arbre (44) supporte un élément d'entraînement (52) et qui est agencé avec la source de tension (30) sur un châssis (14, 56) raccordable à la bicyclette de telle façon que l'élément d'entraînement (52) du moteur électrique (32) peut s'engager dans une relation de transfert de couple de rotation avec un élément d'entraînement homologue (54) de la bicyclette, caractérisé en ce que le châssis supportant le moteur électrique (32) et la source de tension (30) se présente sous la forme d'une pièce de cadre mobile (14) qui forme avec le moteur électrique (32) et la source de tension (30) une unité portable (10) qui peut être placée sur un porte-bagages de roue arrière ou bien sur une pièce de cadre (56), montée fixe sur la bicyclette, correspondant à celui-ci et est raccordable de façon amovible par des moyens de fixation (76) au porte-bagages de roue arrière ou bien à la pièce de cadre (56), montée fixe sur la bicyclette, correspondant à celui-ci, les moyens de fixation étant agencés sur l'unité portable (10) et/ou sur la pièce de cadre (56) montée fixe sur la bicyclette.

2. Dispositif d'entraînement auxiliaire selon la revendication 1, caractérisé en ce que l'élément d'entraînement (52) est un rouleau de friction qui est destiné à être amené contre le pneu (54) de la roue arrière de la bicyclette.

3. Dispositif d'entraînement auxiliaire selon la revendication 1 ou 2, caractérisé en ce que la pièce de cadre mobile (14) est dotée d'au moins une poignée de transport (24).

4. Dispositif d'entraînement selon l'une des revendications 1 à 3, caractérisé en ce que la pièce de cadre mobile (14) comporte une branche de fixation (16) conformée en vue d'être placée sur la surface horizontale du porte-bagages de la pièce de cadre (56) montée fixe sur la bicyclette, et au moins une branche porteuse (18) perpendiculaire à la précédente et destinée à fixer le moteur électrique (32) et la source de tension (30), des éléments de raccordement (70) étant prévus au moins sur la branche de fixation (16) en vue de raccorder la pièce de cadre mobile (14) à la pièce de cadre (56) montée fixe sur la bicyclette.

5. Dispositif d'entraînement auxiliaire selon la revendication 4, caractérisé en ce que les éléments de raccordement sont formés d'éléments (76, 64) se présentant sous la forme de pattes ou de fiches, qui coopèrent avec des éléments homologues conjugués (80, 62) prévus sur la pièce de cadre (56) montée fixe sur la bicyclette.

6. Dispositif d'entraînement auxiliaire selon l'une des revendications 1 à 5, caractérisé en ce que les éléments de raccordement sont formés de brides pouvant être serrées et desserrées manuellement, qui sont conformées en vue d'enserrer des montants de la pièce de cadre (56) montée fixe sur la bicyclette.

7. Dispositif d'entraînement auxiliaire selon l'une des revendications 4 à 6, caractérisé en ce que la section d'actionnement d'au moins un élément de raccordement est combinée à une poignée de transport de l'unité portable.

8. Dispositif d'entraînement auxiliaire selon l'une des revendications 1 à 7, caractérisé en ce que la source de tension comporte un accumulateur et un régulateur de tension, et en ce que, sur la pièce de cadre mobile (14), il est prévu une pièce de connecteur, reliée électriquement au régulateur de tension, à laquelle peut être raccordé un câble fixé à la bicyclette, lequel câble relie le régulateur de tension à un dispositif d'actionnement (84) agencé sur le guidon (12) de la bicyclette.

9. Dispositif d'entraînement auxiliaire selon la revendication 8, caractérisé en ce qu'une pièce de connecteur montée fixe sur la bicyclette et reliée au câble, et la pièce de connecteur du côté du cadre, sont agencées de telle façon qu'elles s'engagent automatiquement l'une avec l'autre lorsque la pièce de cadre mobile (14) est placée sur la pièce de cadre (56) montée fixe sur la bicyclette.

10. Dispositif d'entraînement auxiliaire selon l'une des revendications 1 à 9, caractérisé en ce que, lors de l'utilisation d'un dispositif d'entraînement par rouleau de friction, le moteur électrique (32) sur la pièce de cadre mobile (14) est monté de façon à pouvoir pivoter autour d'un axe de pivotement (40) perpendiculaire à l'axe de son arbre (44) et parallèle au plan de la roue.

11. Dispositif d'entraînement auxiliaire selon la revendication 10, caractérisé en ce que le moteur électrique (32) est maintenu, sous l'action d'une force de précontrainte exercée par un moyen formant ressort (86), dans sa position de fonctionnement dans laquelle le rouleau de friction (52) porte contre le pneu (54) de la bicyclette.

12. Dispositif d'entraînement auxiliaire selon la revendication 10 ou 11, caractérisé en ce que le moteur électrique (32) est réglable entre une position de fonctionnement dans laquelle le rouleau de friction (52) porte contre le pneu (54), et une position hors service dans laquelle le rouleau de friction (52) est écarté du pneu (54).

13. Dispositif d'entraînement auxiliaire selon la revendication 12, caractérisé en ce que le moteur électrique (32) est réglable au moyen d'un câble Bowden (50) qui est relié d'un côté à une pièce (46) montée fixe sur le moteur et d'un autre côté à un levier de commande agencé sur le guidon (12) de la bicyclette, un couplage actionnable manuellement étant prévu entre le câble Bowden (50) et la pièce (46) montée fixe sur le moteur.

14. Dispositif d'entraînement auxiliaire selon l'une des revendications 10 à 13, caractérisé en ce que le moteur électrique (32) est monté de façon réglable, dans la direction de l'axe de son arbre (44), dans un dispositif de support (38) monté de façon à pouvoir pivoter sur la pièce de cadre mobile (14).

15. Dispositif d'entraînement auxiliaire selon l'une des revendications 1 à 14, caractérisé en ce que le moteur électrique (32) est agencé sur la pièce de cadre mobile (14) de telle façon que l'axe de son arbre (44), dans la position de fonctionnement du moteur (32), est dirigé sensiblement parallèlement à l'axe de la roue, de sorte que le rouleau de friction (52) porte contre la surface de roulement du pneu (54).

16. Dispositif d'entraînement auxiliaire selon la revendication 15, caractérisé en ce que la pièce de cadre (56) montée fixe sur la bicyclette est reliée à un garde-boue (66, 68) de la roue arrière, ce garde-boue comportant une ouverture (70) servant à laisser passer le rouleau de friction (52) destiné à porter contre la surface de roulement du pneu.

17. Dispositif d'entraînement auxiliaire selon la revendication 16, caractérisé en ce que, lorsque la pièce de cadre mobile (14) est retirée, l'ouverture (70) peut être fermée au moyen d'une trappe ou bien d'une jupe (74), à fermeture automatique, constituée d'une ou plusieurs pièces.

18. Dispositif d'entraînement auxiliaire selon l'une des revendications 15 à 17, caractérisé en ce qu'un longeron (58) de la pièce de cadre montée fixe sur la bicyclette, qui est dirigé parallèlement à la direction de roulement de la bicyclette, a une section (60) incurvée en forme de U ouvert vers le haut, en vue de recevoir le moteur électrique (32).

19. Dispositif d'entraînement auxiliaire selon l'une des revendications 1 à 14, caractérisé en ce que le moteur électrique (32) est monté sur la pièce de cadre mobile (14) de telle façon que l'axe de son arbre, dans la position de fonctionnement du moteur, soit dirigé sensiblement parallèlement au plan de la roue, de sorte que le rouleau de friction (52) porte contre le flanc du pneu.

20. Dispositif d'entraînement auxiliaire selon la revendication 19, caractérisé en ce que l'unité moteur/rouleau de friction (32, 52) sur la branche de support (18) est décalée vers l'extérieur, de sorte que ses pièces, dans la position hors service, soient parallèles au plan de la roue, et n'empêchent plus le retrait de la pièce de cadre mobile (14) d'un porte-bagages.

21. Dispositif d'entraînement auxiliaire selon l'une des revendications 18 à 20, caractérisé en ce que la pièce de cadre mobile (14) comporte deux branches de support (18) parallèles entre elles, destinées à être agencées des deux côtés de la roue arrière.

22. Dispositif d'entraînement auxiliaire selon les revendications 19 et 21, caractérisé en ce qu'un moteur électrique (32) et une bride de fixation (38) sont agencés sur chaque branche de support (18).

23. Dispositif d'entraînement auxiliaire selon l'une des revendications 1 à 22, caractérisé en ce que la surface périphérique du rouleau de friction (52) se présente sous la forme d'une surface rectifiée.

24. Dispositif d'entraînement auxiliaire selon la revendication 23, caractérisé en ce qu'une bande flexible de type meule diamantée est agencée sur la surface périphérique d'une âme de rouleau de friction (52), ladite bande étant dotée de boutons plats en nickel garnis de diamants.

25. Dispositif d'entraînement auxiliaire selon l'une des revendications 1 à 24, caractérisé en ce que la branche de fixation (16) de la pièce de cadre mobile (14) est construite de telle façon que la bride à ressort du porte-bagages ou de la pièce de cadre (56) montée fixe sur la bicyclette reste fonctionnelle lorsque la pièce de cadre mobile (14) est en place.

26. Dispositif d'entraînement auxiliaire selon l'une des revendications 1 à 21, caractérisé en ce que la branche de fixation (16) de la pièce de cadre mobile (14) se présente sous la forme d'une surface de porte-bagages, et supporte une bride à ressort.

27. Dispositif d'entraînement auxiliaire selon l'une des revendications 1 à 26, caractérisé en ce que, associés au guidon (12) de la bicyclette, des éléments de commande en vue de commander l'entraînement sont agencés sur un boîtier positionné en dessous de la poignée de guidon (12), lequel boîtier est fixé, par un étrier de retenue confectionné de façon appropriée sur le guidon, à côté de la poignée de guidon, et réalisé de façon à ce que tous les éléments de commande soient actionnables par le pouce de la main correspondante.

28. Dispositif d'entraînement auxiliaire selon la revendication 27, caractérisé en ce que l'étrier de retenue du boîtier est fixé, par des éléments formant fiches, de façon amovible sur le guidon, et est conformé avec des éléments de couplage électrique qui s'engagent automatiquement avec des éléments de couplage correspondants prévus sur le guidon lors du montage.

29. Dispositif d'entraînement auxiliaire selon la revendication 27 ou 28, caractérisé en ce que les éléments de commande sont placés sur une barrette de commutation, positionnée en dessous de la poignée de guidon, qui est reliée de façon amovible au guidon (12) par des éléments formant fiches et dont les éléments de commande sont actionnables par le pouce de la main correspondante.
